# EUROPÄISCHE PATENTANMELDUNG

(11) **EP 4 075 261 A1**
(43) Veröffentlichungstag der Anmeldung: **19.10.2022**
(21) Anmeldenummer: 21168277.8
(22) Anmeldetag: 14.04.2021
(51) Int. Cl.: G06F 7/58

(54) **INTEGRITÄT EINES ZUFALLSZAHLENGENERATORS**

(71) Anmelder: Siemens Aktiengesellschaft, 80333 München (DE)
(72) Erfinder: Aschauer, Dr. Hans, 81829 München (DE); Böffgen, Dr. Pascale, 81247 München (DE); Falk, Dr. Rainer, 85586 Poing (DE); Heintel, Markus, 81377 München (DE); Zwanzger, Dr. Johannes, 85579 Neubiberg (DE)

(57) **Zusammenfassung**

Die Erfindung gibt ein Verfahren zum Ermitteln einer Integritätsinformation mindestens eines Zufallszahlengenerators an, mit den Schritten:
- Empfangen (S1) einer Sequenz von Zufallszahlen, wobei die Sequenz von Zufallszahlen von dem mindestens einen Zufallszahlengenerator erstellt wurde,
- Extrahieren (S2) von Trainingssequenzen und von Testsequenzen aus der Sequenz von Zufallszahlen,
- Laden (S3) eines neuronalen Netzes,
- Erstellen (S4) eines trainierten neuronalen Netzes durch ein Trainieren des neuronalen Netzes mit den Trainingssequenzen,
- Vorhersagen (S5) von Prognosewerten basierend auf führenden Werten der Testsequenzen durch das trainierte neuronale Netz,
- Ermitteln (S6) einer Trefferquote, wobei in die Trefferquote einfließt, zu welchem Anteil die Prognosewerte Folgewerten, welche den führenden Werten der Testsequenzen folgen, entsprechen und
- Ausgabe (S7) einer Integritätsinformation basierend auf der Trefferquote,
wobei das Verfahren während der Laufzeit, insbesondere des operativen Betriebs, des mindestens einen Zufallszahlengenerators durchgeführt wird.

## Beschreibung

### HINTERGRUND DER ERFINDUNG

### Gebiet der Erfindung

Die vorliegende Erfindung betrifft ein Verfahren zum Ermitteln einer Integritätsinformation mindestens eines Zufallszahlengenerators und ein zugehöriges Computerprogrammprodukt und computerlesbares Medium.

### Beschreibung des Stands der Technik

Die Erzeugung sicherer, echter Zufallszahlen durch sog. physikalische Zufallszahlengeneratoren oder TRNGs (True Random Number Generators) ist für verschiedene kryptographische Verfahren von großer Bedeutung, z.B. zur Erzeugung von Nonces oder Schlüsseln zum Signieren, Authentisieren, Verschlüsseln, etc.

Schon kleine Fehler in TRNGs, die zu Abweichungen von der angestrebten Verteilung in der Folge der erzeugten Zufallsbits führen, können schwerwiegende Folgen für die Sicherheit der darauf aufbauenden Kryptoverfahren haben. Solche Fehler müssen im Generator nicht von Anfang an vorliegen, sondern können sich erst im Lauf der Zeit oder temporär einschleichen, z.B. infolge von Alterung oder Temperaturschwankungen. Ihre Erkennung ist häufig schwierig, und selbst anerkannte statistische Tests können "blind" für spezielle Muster in der Zufallszahlenfolge sein.

Bekannt sind verschiedenste Tests zur Überprüfung der "Zufälligkeit" von RNG-Ausgaben, z.B. gemäß NIST SP800-22: "Frequency (Monobit) Test", "Frequency Test within a Block", "Runs Test", usw.

Die Aufgabe der Erfindung besteht darin, eine Lösung zur Bereitstellung sicherer, echter Zufallszahlen anzugeben.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ermitteln einer Integritätsinformation mindestens eines Zufallszahlengenerators,
mit den Schritten:
- Empfangen einer Sequenz von Zufallszahlen, wobei die Sequenz von Zufallszahlen von dem mindestens einen Zufallszahlengenerator erstellt wurde,
- Extrahieren von Trainingssequenzen und Testsequenzen aus der Sequenz von Zufallszahlen,
- Laden eines neuronalen Netzes,
- Erstellen eines trainierten neuronalen Netzes durch ein Trainieren des neuronalen Netzes mit den Trainingssequenzen,
- Vorhersagen von Prognosewerten basierend auf führenden Werten der Testsequenzen durch das trainierte neuronale Netz,
- Ermitteln einer Trefferquote, wobei in die Trefferquote einfließt, zu welchem Anteil die Prognosewerte Folgewerten, welche den führenden Werten der Testsequenzen folgen, entsprechen und
- Ausgabe einer Integritätsinformation basierend auf der Trefferquote,
wobei das Verfahren während der Laufzeit, insbesondere des operativen Betriebs, des mindestens einen Zufallszahlengenerators durchgeführt wird.

Die Integritätsinformation bezeichnet eine Information bezüglich des Vorhandenseins oder Nicht-Vorhandenseins einer Integrität des Zufallszahlengenerators. Integrität bedeutet, dass sich der Zufallszahlengenerator nicht oder nur unter Kenntnis eines Geheimnisses, wie z.B. des Seeds eines Pseudozufallszahlengenerators (PRNG), oder unter hohem Berechnungsaufwand, z.B. einer Brute-Force-Suche nach dem richtigen Seed, von einem echten Zufallszahlengenerator unterscheiden lässt. Dies schließt insbesondere aus, dass die Zufallszahlen vorhersagbar sind.

Ein Aspekt der Erfindung besteht darin, ein neuronales Netz zu verwenden, um einen Zufallszahlengenerator während seiner Laufzeit, insbesondere im operativen Einsatz, kontinuierlich zu überprüfen. Der Zufallszahlengenerator wird somit dynamisch geprüft und nicht nur einmalig vor seinem Einsatz im Betrieb. Sowohl das Anlernen des neuronalen Netzes wie die Verwendung des angelernten neuronalen Netzes erfolgt daher im Betrieb, in dem von dem Zufallszahlengenerator generierte Zufallswerte für eine Security-Funktion oder eine kryptographische Funktion verwendet werden. Dabei können insbesondere Zufallswerte, die nicht als Wert in eine Trainingssequenz oder Testsequenz eingehen, für eine Security-Funktion oder eine kryptographische Funktion verwendet werden.

Im Unterschied zur vorliegenden Offenbarung handelt es sich im Stand der Technik um "a priori" definierte Algorithmen, die auf die Aufdeckung ganz bestimmter Regelmäßigkeiten in den Zufallssequenzen zugeschnitten sind, und nicht um ein dynamisch lernendes neuronales Netz.

In dieser Offenbarung wird ein solches Verfahren auf Basis von neuronalen Netzen vorgestellt, das im Gegensatz zu bisher bekannten Tests nicht nur "a priori" festgelegte Muster in den Ausgabedaten des TRNG, sondern auch sehr individuelle Regelmäßigkeiten (=Fehler) erkennen kann.

Die Zufälligkeit einer Sequenz von Zufallszahlen, auch als ausgegebener Bitstrom bezeichenbar, eines Zufallszahlengenerators, auch als TRNG bezeichenbar, soll mit Hilfe eines neuronalen Netzes überprüft werden.

Erfindungsgemäß kann jeweils ein Teil der Sequenz von Zufallszahlen für den produktiven oder operativen Betrieb (also den eigentlichen Einsatzzweck des TRNG), ein Teil für das Training des neuronalen Netzes (die Trainingssequenz) und ein Teil für die Prüfung der Integrität (die Testsequenz) des TRNG verwendet werden, wobei Überschneidungen der Teile möglich sind.

In einer weiteren Weiterbildung der Erfindung ist die Sequenz von Zufallszahlen als Bitfolge oder Bitstrom ausgebildet.

Bei der Sequenz von Zufallszahlen kann es sich insbesondere um Rohdaten einer oder mehrerer physikalischer Entropiequellen (physikalischer Zufallszahlengenerator) handeln. Es ist jedoch auch möglich, dass die Rohdaten vorverarbeitet sind, z.B. unter Nutzung von Signalverarbeitungsverfahren (analoger oder digitaler Filter).

Das neuronale Netz wird kontinuierlich mit den Trainingssequenzen trainiert. Es können somit kontinuierlich Wiederholungen des Verfahrens stattfinden. Ferner werden Testsequenzen verwendet, um mit Hilfe des trainierten neuronalen Netzes auf Basis einer gewissen Anzahl führender Werte der Testsequenz Folgewerte der Testsequenz vorherzusagen. Anschließend wird die Prognose, also die Prognosewerte, mit den tatsächlichen Folgewerten der Testsequenz verglichen.

Ergibt sich hierbei insbesondere eine Bit-Trefferquote, die signifikant von 50% abweicht (also dem, was mit zufälligem Raten zu erwarten wäre), bedeutet das, dass in den jüngsten Ausgaben des TRNG mit hoher Wahrscheinlichkeit ein Muster enthalten ist, welches durch das neuronale Netz erkannt und zur Vorhersage genutzt wurde. Bei korrekter Funktionsweise des TRNG darf es solche Muster aber nicht geben; dementsprechend kann eine unerwartet hohe Vorhersagequote bzw. Trefferquote des neuronalen Netzes als Indikator für eine Fehlfunktion des TRNG betrachtet werden, insbesondere verbunden mit der Einleitung entsprechender Maßnahmen.

Das erfindungsgemäße Verfahren wird im Folgenden ausschließlich im Hinblick auf die Laufzeitüberwachung von TRNGs dargestellt, bei welchen ein Defekt bzw. eine Verzerrung durch äußere Einflüsse deutlich wahrscheinlicher ist als bei einem deterministisch berechneten Pseudozufallszahlengenerator (PRNG). Unabhängig davon kommt es aber auch als Prüftool für die Beurteilung der algorithmischen Qualität von PRNGs vor deren produktivem Einsatz in Frage.

Die Erfindung bietet den Vorteil, dass durch die Verwendung eines neuronalen Netzes auch vorab nicht berücksichtigte Regelmäßigkeiten in den von einem TRNG erzeugten Zufallssequenzen zur Laufzeit, insbesondere im operativen Betrieb, erkannt werden können. Das in dieser Erfindungsmeldung vorgestellte Verifikationsverfahren ist damit sowohl eigenständig als auch als komplementäre Ergänzung zu bereits bekannten Tests, z.B. denen aus NIST SP800-22, nutzbar.

Die Möglichkeit, vorab nicht festgelegte Muster in den Ausgaben des TRNG zu erkennen, ergibt sich im Allgemeinen durch die Lernfähigkeit eines neuronalen Netzes. Im Speziellen befreit die Verwendung insbesondere eines Recurrent Neural Network aufgrund der Flexibilität bezüglich der Inputlänge der Sequenz an Zufallszahlen von der Notwendigkeit, die Sequenz an Zufallszahlen des TRNG "a priori" in ein starres (und damit die Allgemeinheit der Erkennung einschränkendes) Anordnungsschema zu bringen und verspricht außerdem durch die Möglichkeit, lokale Kontextinformation aufzubauen, eine hohe Erkennungsleistung.

Die Erfindung umfasst außerdem, dass es möglich ist, mehrere neuronale Netze mit unterschiedlichen Netzdesigns (Netztopologie) zu verwenden.

Die Erfindung umfasst außerdem, dass es möglich ist, eine Querprüfung mehrerer TRNGs durchzuführen. Dabei kann erkannt werden, wenn die Sequenz an Zufallszahlen, auch als Zufallsbitfolge bezeichenbar, eines ersten TRNG es ermöglicht, Teile der Zufallsbitfolge eines zweiten TRNG vorherzusagen.

In einer Weiterbildung der Erfindung weisen die Trainingssequenzen und die Testsequenzen keine Schnittmenge auf. Das bedeutet, dass die Trainingssequenz und die Testsequenz nicht überlappen. Dies hat den Vorteil das die Testsequenz nicht bereits bei dem Training an den Zufallszahlengenerator bekannt gegeben wird.

Zwischen den Trainingssequenzen und den Testsequenzen ist eine Überlappung zwar prinzipiell möglich, allerdings darf das Training mit Testsequenzen erst geschehen, wenn die Vorhersage der Folgewerte der entsprechenden Testsequenz bereits abgeschlossen ist - andernfalls würde das neuronale Netz im Vorhersagetest für Folgewerte der vermeintlichen "Testsequenz" durch das vorangehende Training mit der vermeintlichen "Testsequenz" mit hoher Wahrscheinlichkeit eine stark überdurchschnittliche Trefferquote erzielen, die nicht auf einen Fehler im TRNG zurückzuführen ist, sondern auf teilweises "Auswendiglernen" der Sequenz.

In einer weiteren Weiterbildung ist das neuronale Netz als Recurrent Neural Network ausgebildet, insbesondere als Gated Recurrent Unit (GRU) Network oder als Long Short-Term Memory (LSTM) Network.

In einer weiteren Weiterbildung der Erfindung wird ein Signifikanztest auf eine Vorhersagewahrscheinlichkeit der Prognosewerte angewandt. Dies hat den Vorteil, dass erkannt wird, ob die Anzahl der Prognosewerte ausreichend ist, um eine nach gewünschtem Signifikanzniveau hinreichende Aussage zu treffen.

Ferner sollten die Trainingssequenz und die Testsequenz aus ausreichend langen Bitfolgen bestehen (und insbesondere also nicht aus Bits an willkürlich ausgewürfelten Positionen von der Sequenz an Zufallszahlen), damit sowohl im Training als auch im Test Abhängigkeiten, die auf der relativen Position von Zufallsbits zueinander beruhen, erkannt werden können. Eine Mindestlänge von Bitfolgen kann fest vorgegeben oder vorgebbar sein, oder sie kann dynamisch ermittelt werden, z.B. abhängig vom Ergebnis einer bereits erfolgten Integritätsprüfung des Zufallszahlengenerators.

In einer weiteren Weiterbildung der Erfindung weist das erfindungsgemäße Verfahren außerdem einen weiteren Schritt zur Einleitung entsprechender Maßnahmen, wie insbesondere eine Ausgabe einer Meldung und/oder ein Initiieren einer Aktion, auf. Weiterhin ist es möglich, dass als Maßnahme ein Bereitstellen von generierten Zufallszahlen an eine Security-Funktion oder eine Krypto-Funktion gesperrt wird. Weiterhin ist es möglich, dass als Maßnahme das Gerät, auf dem der Zufallszahlengenerator realisiert ist, neu gestartet (reboot) wird oder dass es in einen Fehlerbetriebsmodus (failure mode) versetzt wird. Weiterhin ist es möglich, dass als Maßnahme eine Ein-/Ausgabeschnittstelle oder eine Netzwerkschnittstelle des Geräts, auf dem der Zufallszahlengenerator realisiert ist, gesperrt oder rekonfiguriert wird.

Weiterhin ist es möglich, dass als Maßnahme oder abhängig von der ermittelten Trefferquote ein Entropieschätzwert angepasst wird. Dies ermöglicht einer Security-Funktion oder einer kryptographischen Funktion, die Güte der ihr bereitgestellten Zufallszahlen anhand des geschätzten Entropiewerts der bereitgestellten Zufallszahlen zu bewerten. Dadurch kann die Security-Funktion oder kryptographische Funktion ihre Funktion davon abhängig anpassen.

In einer weiteren Weiterbildung der Erfindung wird der weitere Schritt eingeleitet, wenn der Signifikanztest ein positives Ergebnis liefert. Ergibt sich somit eine Bit-Trefferquote, die signifikant von 50% abweicht (also dem, was mit zufälligem Raten zu erwarten wäre), bedeutet das, dass in den jüngsten Ausgaben des TRNG mit hoher Wahrscheinlichkeit ein Muster enthalten ist, welches durch das neuronale Netz erkannt und zur Vorhersage genutzt wurde. Bei korrekter Funktionsweise des TRNG darf es solche Muster aber nicht geben; dementsprechend kann eine unerwartet hohe Vorhersagequote des neuronalen Netzes als Indikator für eine Fehlfunktion des TRNG betrachtet werden, verbunden mit der Einleitung entsprechender Maßnahmen.

In einer weiteren Weiterbildung der Erfindung wird das Verfahren während der Laufzeit, insbesondere im operativen Betrieb, des mindestens einen Zufallszahlengenerators für mindestens eine weitere Sequenz von Zufallszahlen wiederholt durchgeführt.

Es findet somit ein kontinuierliches oder durch Pausen unterbrochenes Wiederholen des erfindungsgemäßen Verfahrens für die weiteren Sequenzen an Zufallszahlen, welche durch den Zufallszahlengenerator erstellt wurden, statt. Aus den Sequenzen von Zufallszahlen werden weitere Trainingssequenzen und weitere Testsequenzen extrahiert, es wird das neuronale Netz aus dem vorherigen Verfahrensdurchlauf oder ein untrainiertes neuronales Netz geladen, das geladene neuronale Netz wird mit den weiteren Trainingssequenzen trainiert, das wiederum trainierte neuronale Netz wird verwendet um wiederum Folgewerte vorherzusagen, es wird wiederum eine Trefferquote ermittelt und eine Integritätsinformation ausgegeben.

Zusammengefasst findet ein kontinuierliches, ein kontinuierlich wiederholtes oder ein unterbrochen wiederholtes Training statt.

Somit wird das Training des neuronalen Netzes regelmäßig mit aktualisierten Ausgaben, den weiteren Sequenzen an Zufallszahlen, des TRNG weitergeführt, da so auch kürzlich hinzugekommene Fehler im TRNG erkennbar sind.

In einer weiteren Weiterbildung der Erfindung werden in wiederholten Durchführungen des Verfahrens Trainingssequenzen unterschiedlicher Länge verwendet.

Das bedeutet, dass in Wiederholungen des Verfahrens:
- die Sequenz von Zufallszahlen,
- die Trainingssequenz,
- die Testsequenz,
- die führenden Werten der Testsequenz und/oder
- die Folgewerte der Testsequenz
eine variable oder unterschiedliche Länge bzw. Anzahl an Werten aufweisen. Der Vorteil wird im folgenden Beispiel veranschaulicht.

Welche Muster das neuronale Netz gut erkennen kann, hängt stark von der Netztopologie ab, etwa davon, wie viele Schichten welcher Größe es gibt und wie diese miteinander verbunden sind. Die Topologie sollte auf jeden Fall so gewählt sein, dass Muster im Input, den führenden Werten, grundsätzlich positionsunabhängig erkannt werden können. Zur Veranschaulichung ein Beispiel, bei dem dies nicht der Fall ist:
Betrachtet wird ein neuronales Netz, das aus einer Input-Schicht mit n Neuronen (zuletzt vom TRNG ausgegebene Bits) und einer Outputschicht mit einem einzelnen Neuron (Vorhersage für das nächste Bit) besteht. Außerdem kann das Netz beliebige Zwischenschichten enthalten; es sollen jedoch keine iterationsübergreifenden Verbindungen vorkommen, d.h. das Netz hat kein "Gedächtnis" zu vorherigen Inputs. Insbesondere handelt es sich nicht um ein Recurrent Network. Weiterhin werden alle vom TRNG erzeugten Bits in der Reihenfolge ihrer Erzeugung in Blöcke der Länge n+1 aufgeteilt und als Input-/Outputpaare fürs Training bzw. die Überprüfung genutzt, wobei jedes Input- bzw. Outputneuron stets mit den Bits an einer bestimmten Position des Blockes belegt wird; beispielsweise also das erste Inputneuron stets mit dem ersten Bit des Blockes und das Outputneuron mit dem letzten Bit des Blockes.

Ist der TRNG nun dahingehend verzerrt, dass er mit Periode n+1 ein konstantes "1"-Bit- ausgibt (während alle anderen Zufallsbits "funktionieren") und fällt dieses durch die Blockaufteilung auf eine Inputposition, hat das Netz keine Chance, ein Muster zu erkennen: Das betreffende Bit taucht nie im Output auf, sondern stellt lediglich einen informationsfreien (weil konstanten) Input dar.

Das obige Beispiel zeigt, dass durch ungeeignetes Netzdesign schon einfache Fehler im TRNG unerkannt bleiben können. Als Konsequenz erscheint es natürlich, jede Form von Blockeinteilung bei den TRNG-Sequenzen zu vermeiden. Entsprechend wird vorgeschlagen, für das neuronale Netz ein sog. Recurrent Neural Network zu verwenden, welches seinen Output nicht nur auf Basis des aktuellen Inputs (und der trainierten Gewichtsparameter) berechnet, sondern zusätzlich auf einen iterationsübergreifenden internen Status zugreifen kann. Hierdurch erhält das Netz eine Art "Gedächtnis" und kann einen Kontext über die bisher gesehenen Inputs aufbauen.

Insbesondere kann es im diskutierten Anwendungsfall mit einer beliebig langen, vom TRNG generierten Bitfolge gespeist werden und darin sowohl kurz- als auch langperiodische Muster erkennen.

In einer im vorrangegangenen Beispiel begründeten, aber davon unabhängigen Weiterbildung der Erfindung basiert die Vorhersage von Prognosewerten zusätzlich auf führenden Werten der Testsequenzen aus vorangegangener Wiederholungen des Verfahrens. Entsprechend wird vorgeschlagen, für das neuronale Netz ein sog. Recurrent Neural Network zu verwenden, welches seinen Output, seine Prognosewerte, nicht nur auf Basis des aktuellen Inputs, den führenden Werten, (und der trainierten Gewichtsparameter) berechnet, sondern zusätzlich auf einen iterationsübergreifenden internen Status zugreifen kann. Hierdurch erhält das Netz eine Art "Gedächtnis" und kann einen Kontext über die bisher gesehenen Inputs, den bisher gesehenen führenden Werten, aufbauen.

In einer weiteren Weiterbildung der Erfindung wird die Sequenz an Zufallszahlen, die Trainingssequenzen und/oder die Testsequenzen zwischengespeichert. Das heißt, das Extrahieren von Trainingssequenzen und von Testsequenzen aus der Sequenz von Zufallszahlen kann direkt erfolgen oder nach dem Zwischenspeichern. Das Training und das Testen kann dann zeitlich verzögert stattfinden.

In einer weiteren Weiterbildung der Erfindung ist der mindestens eine Zufallszahlengenerator als mindestens ein physikalischer Zufallszahlengenerator ausgebildet. Bei der Sequenz von Zufallszahlen, insbesondere dem Bitstrom, kann es sich somit insbesondere um Rohdaten einer oder mehrerer physikalischer Entropiequellen (physikalischer Zufallszahlengenerator) handeln.

In einer weiteren Weiterbildung der Erfindung wird eine weitere Sequenz der Sequenz von Zufallszahlen für einen operativen Betrieb genutzt.

Unter operativem Betrieb wird insbesondere eine Erzeugung von Nonces oder Schlüsseln zum Signieren, Authentisieren, Verschlüsseln, etc. verstanden. Die Trainingssequenz und Testsequenz können dabei mit der weiteren Sequenz für den operativen Betrieb überlappen, d.h. vom TRNG erzeugten Zufallsbits können sowohl produktiv genutzt als auch für den Zweck der Überprüfung verwendet werden.

Dadurch lassen sich bei Bedarf Ressourcen sparen, da der TRNG nicht mit dem Erzeugen zusätzlicher Zufallsdaten für die Überprüfung belastet wird. Umgekehrt kann es aber z.B. aus Security-Gesichtspunkten wünschenswert sein, produktiv genutzte Zufallsdaten (etwa zur Ableitung kryptographischer Schlüssel) nur einmalig einzusetzen, um die potenzielle Angriffsfläche auf diese nicht unnötig zu erhöhen.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

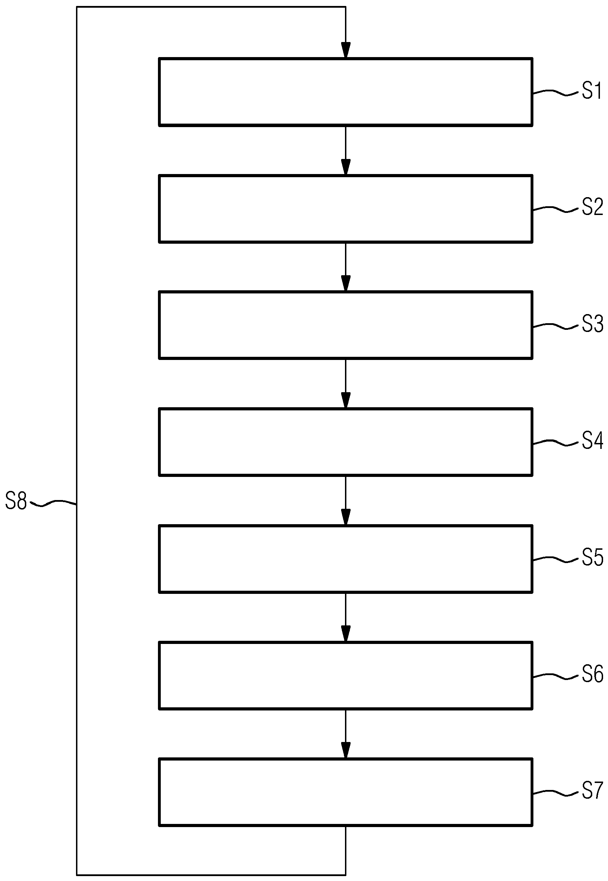

Es zeigt
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens zum Ermitteln einer Integritätsinformation mindestens eines Zufallszahlengenerators.

Das Verfahren weist die folgenden Schritte auf:
- Schritt S1: Empfangen einer Sequenz von Zufallszahlen, wobei die Sequenz von Zufallszahlen von dem mindestens einen Zufallszahlengenerator erstellt wurde,
- Schritt S2: Extrahieren von Trainingssequenzen und von Testsequenzen aus der Sequenz von Zufallszahlen,
- Schritt S3: Laden eines neuronalen Netzes,
- Schritt S4: Erstellen eines trainierten neuronalen Netzes durch ein Trainieren des neuronalen Netzes mit den Trainingssequenzen,
- Schritt S5: Vorhersagen von Prognosewerten basierend auf führenden Werten der Testsequenzen durch das trainierte neuronale Netz,
- Schritt S6: Ermitteln einer Trefferquote, wobei in die Trefferquote einfließt, zu welchem Anteil die Prognosewerte Folgewerten, welche den führenden Werten der Testsequenzen folgen, entsprechen und
- Schritt S7: Ausgabe einer Integritätsinformation basierend auf der Trefferquote,
wobei das Verfahren während der Laufzeit, insbesondere des operativen Betriebs, des mindestens einen Zufallszahlengenerators durchgeführt wird.

Fig. 1 zeigt außerdem, dass das Verfahren in Schritt S8 während der Laufzeit, insbesondere des operativen Betriebs, des mindestens einen Zufallszahlengenerators für mindestens eine weitere Sequenz von Zufallszahlen wiederholt durchgeführt wird. In der Praxis läuft das Verfahren kontinuierlich in weiteren Wiederholungen und für weitere Sequenzen an Zufallszahlen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ermitteln einer Integritätsinformation mindestens eines Zufallszahlengenerators,
mit den Schritten:
- Empfangen (S1) einer Sequenz von Zufallszahlen, wobei die Sequenz von Zufallszahlen von dem mindestens einen Zufallszahlengenerator erstellt wurde,
- Extrahieren (S2) von Trainingssequenzen und von Testsequenzen aus der Sequenz von Zufallszahlen,
- Laden (S3) eines neuronalen Netzes,
- Erstellen (S4) eines trainierten neuronalen Netzes durch ein Trainieren des neuronalen Netzes mit den Trainingssequenzen,
- Vorhersagen (S5) von Prognosewerten basierend auf führenden Werten der Testsequenzen durch das trainierte neuronale Netz,
- Ermitteln (S6) einer Trefferquote, wobei in die Trefferquote einfließt, zu welchem Anteil die Prognosewerte Folgewerten, welche den führenden Werten der Testsequenzen folgen, entsprechen und
- Ausgabe (S7) einer Integritätsinformation basierend auf der Trefferquote,
wobei das Verfahren während der Laufzeit, insbesondere des operativen Betriebs, des mindestens einen Zufallszahlengenerators durchgeführt wird.

2. Verfahren nach Anspruch 1,
wobei die Trainingssequenzen und die Testsequenzen keine Schnittmenge aufweisen.

3. Verfahren nach einem der vorhergehenden Ansprüche,
wobei das neuronale Netz als Recurrent Neural Network, insbesondere als:
- Gated Recurrent Unit (GRU) Network oder
- Long Short-Term Memory (LSTM) Network
ausgebildet ist.

4. Verfahren nach einem der vorhergehenden Ansprüche,
wobei ein Signifikanztest auf eine Vorhersagewahrscheinlichkeit der Prognosewerte angewandt wird.

5. Verfahren nach einem der vorhergehenden Ansprüche,
mit dem weiteren Schritt:
- Ausgabe einer Meldung und/oder
- Initiieren einer Aktion.

6. Verfahren nach Anspruch 4 und 5,
wobei der weitere Schritt nach Anspruch 5 eingeleitet wird, wenn der Signifikanztest ein positives Ergebnis liefert.

7. Verfahren nach einem der vorhergehenden Ansprüche,
wobei das Verfahren während der Laufzeit, insbesondere des operativen Betriebs, des mindestens einen Zufallszahlengenerators für mindestens eine weitere Sequenz von Zufallszahlen wiederholt (S8) durchgeführt wird.

8. Verfahren nach Anspruch 7,
wobei in wiederholten Durchführungen des Verfahren Trainingssequenzen unterschiedlicher Länge verwenden werden.

9. Verfahren nach Anspruch 7 oder 8,
wobei die Vorhersage von Prognosewerten zusätzlich auf führenden Werten der Testsequenzen aus vorrangegangenen Wiederholungen des Verfahrens basiert.

10. Verfahren nach einem der vorhergehenden Ansprüche,
wobei die Sequenz von Zufallszahlen als Bitfolge oder Bitstrom ausgebildet ist.

11. Verfahren nach einem der vorhergehenden Ansprüche,
wobei die Trainingssequenzen und/oder die Testsequenzen zwischengespeichert wird.

12. Verfahren nach einem der vorhergehenden Ansprüche,
wobei der mindestens eine Zufallszahlengenerator als mindestens ein physikalischer Zufallszahlengenerator ausgebildet ist.

13. Verfahren nach einem der vorhergehenden Ansprüche,
wobei eine weitere Sequenz der Sequenz von Zufallszahlen für einen operativen Betrieb genutzt wird.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
